# FASCICULE DE BREVET EUROPEEN

(11) **EP 2 956 715 B1**
(45) Date de publication et mention de la délivrance du brevet: **12.06.2019**
(21) Numéro de dépôt: 14708675.5
(22) Date de dépôt: 14.02.2014
(51) Int. Cl.: F22B 1/02, F22B 37/26, G21C 1/32

(54) **INSTALLATION DE PRODUCTION D'ELECTRICITE COMPORTANT UN DISPOSITIF DE PRODUCTION DE VAPEUR D'EAU DE HAUTEUR REDUITE, APPLICATION AUX REACTEURS REP ET REB**
STROMERZEUGUNGSANLAGE MIT EINER VORRICHTUNG ZUR PRODUKTION VON DAMPF MIT REDUZIERTER HÖHE UND ANWENDUNG DAVON AUF PWR- UND BWR-REAKTOREN
ELECTRICITY GENERATION FACILITY COMPRISING A DEVICE FOR PRODUCING STEAM OF REDUCED HEIGHT, APPLICATION TO PWR AND BWR REACTORS

(30) Priorité: 15.02.2013 FR 1351329
(43) Date de publication de la demande: 23.12.2015
(73) Titulaire: Commissariat à l'Énergie Atomique et aux Énergies Alternatives, 75015 Paris (FR)
(72) Inventeur: GAUTIER, Guy-Marie, F-84120 Pertuis (FR); ALLEGRE, Pierre, F-13100 Aix-en-Provence (FR)
(74) Mandataire: Nony
(86) Numéro de dépôt international: PCT/IB2014/059000
(87) Numéro de publication internationale: WO 2014/125442

(56) Documents cités:
- FR-A1- 2 471 550
- JP-A- H01 116 497
- JP-A- H03 255 983
- US-A- 3 213 833
- US-A- 5 564 370
- US-A1- 2011 051 880

## Description

### Domaine technique

La présente invention concerne une installation de production d'énergie électrique comportant un dispositif de production de vapeur saturée et d'une turbine à vapeur adaptée pour produire de l'électricité à partir de la vapeur d'eau sèche issue de la vapeur saturée.

Elle concerne plus particulièrement une telle installation dans lequel la source de chaleur est un coeur de réacteur nucléaire.

L'invention a trait plus particulièrement au dispositif de production de vapeur d'eau saturée à partir de la chaleur dégagée, directement ou indirectement, par le coeur de réacteur.

L'invention vise à réduire la hauteur d'un tel dispositif de production de vapeur d'eau saturée et ce, sans introduire de circulation forcée de la vapeur d'eau.

L'application principale visée par l'invention est un réacteur à eau pressurisée (REP) avec générateur de vapeur, comme ceux déjà en service, de la génération dite II et III.

Bien que décrite en référence avec l'application principale, l'invention s'applique également aux réacteurs à eau bouillante (REB).

L'invention s'applique en particulier aux réacteurs de petite ou moyenne puissance qu'ils soient modulaires ou non. Elle s'applique en particulier pour les réacteurs de conception intégrée.

### Art antérieur

Il existe de nombreux réacteurs à eau pressurisée (REP) déjà en service dans le monde entier, avec une gamme large de puissance. Pour des raisons de sûreté, la recherche sur les réacteurs à eau pour des réacteurs dit de petites puissances ou SMR en anglais (acronyme de « *Small Modular Reactor* ») conduit à chercher des structures de réacteur où le maximum de composants est intégré dans la cuve de réacteur.

Il existe dans la littérature une multitude de designs proposant des architectures de réacteurs de type intégrées. Les réacteurs de type intégré sont en général très élancés et ont une hauteur de cuve bien souvent supérieure à une vingtaine de mètre.

Parmi les architectures de réacteurs intégrés, on peut distinguer deux types : le premier dans lequel le générateur de vapeur (GV) est logé dans la cuve de réacteur et le deuxième dans lequel le générateur de vapeur est agencé au-dessus de la cuve de réacteur et forme en tant que tel le couvercle de celle-ci.

Dans ce deuxième type d'architecture, le coeur du réacteur où est dégagé la chaleur est située en partie basse de la cuve. L'eau servant de caloporteur circule généralement en convection forcée grâce à des pompes mais peut aussi fonctionner en convection naturelle. L'eau froide entre dans le coeur par son entrée inférieure, traverse le coeur où elle s'échauffe, monte dans un espace au centre de la cuve, usuellement dénommé « riser », jusqu'à l'entrée du générateur de vapeur qui est située au-dessus de la cuve. Cette eau est nommée eau primaire pour les REP. L'eau se refroidit en traversant le générateur de vapeur et cède sa chaleur au circuit de fluide de travail, nommé eau secondaire pour les REP, puis retourne à la cuve dans un espace annulaire entre une virole interne et la paroi externe définissant l'enceinte du générateur de vapeur.

Différentes conceptions de réacteurs REP reprennent cet agencement : on peut citer ici le projet de réacteur SMR au nom de la société Westinghouse, tel que décrit dans la publication [1]. On peut citer encore le projet de réacteur SMR au nom de la demanderesse tel que décrit et revendiqué dans le brevet EP 1464058B1.

Dans les deux projets de réacteurs, le générateur de vapeur est du type bouilleur et il est associé à un réacteur nucléaire.

Ce générateur de vapeur bouilleur comporte un dispositif de production de vapeur saturée et deux ensembles disposés en amont du dispositif de production de vapeur saturée. La fonction globale de ces deux ensembles disposés en série dans le sens de l'écoulement de la vapeur d'eau secondaire est d'assurer que la vapeur d'eau produite par le faisceau de tubes à l'intérieur duquel circule l'eau primaire, soit la plus sèche possible en sortie du générateur. Un premier ensemble, dit ensemble de séparateurs, généralement constitué de séparateurs à cyclone est adapté pour enlever la majeure partie de l'eau de la vapeur qui revient par gravité en bas du générateur. Le deuxième ensemble en aval permet de capter ou autrement dit collecter les quelques particules d'eau susceptibles d'être encore entraînées par la vapeur en aval de l'ensemble de séparateurs.

Dans le projet SMR de la société Westinghouse [1], le générateur de vapeur bouilleur est en deux parties. La première partie est agencée au-dessus de la cuve et est de forme annulaire. L'eau primaire monte dans un tube au centre du faisceau et est distribuée à l'entrée des tubes, traverse les tubes verticalement et retourne à la cuve de réacteur. L'eau secondaire circule à l'extérieur des tubes. Dans cette première partie, la vapeur produite est très humide. Elle est envoyée dans la seconde partie du générateur de vapeur pour y être séchée avant d'être utilisée pour actionner une turbine.

Cette option de conception a été retenue pour que l'ensemble du circuit primaire, c'est-à-dire la cuve et le faisceau de tubes constituant la première partie du générateur de vapeur, soit le plus compacte possible. La seconde partie du générateur de vapeur est alors physiquement séparée de la première partie et contient à la fois l'ensemble des séparateurs à cyclone et l'ensemble des sécheurs dans un composant situé à côté de l'enceinte du générateur de vapeur. Le retour des condensats ne pouvant plus alors s'effectuer par gravité, il s'effectue nécessairement à l'aide d'une pompe de circulation. Autrement dit, dans ce projet SMR [1], il est nécessaire de prévoir une pompe pour la circulation forcée de l'eau secondaire. De plus, le fluide quittant la première partie du générateur de vapeur vers la seconde partie du générateur de vapeur contient une grande proportion d'eau en phase liquide, qui est mélangée à la phase vapeur et peut donc s'écouler en formant des bouchons d'eau. Pour limiter les efforts mécaniques sur les tuyauteries et les instabilités d'écoulement liés à ces bouchons d'eau, il est préférable de placer la seconde partie du générateur de vapeur au-dessus de la première. Dans ces conditions, l'ensemble cuve plus la totalité du générateur de vapeur représente une grande hauteur.

Dans un réacteur REP à boucles ou un réacteur REP de type intégré, comme celui du projet décrit dans le brevet EP 1464058B1, les deux parties du générateur de vapeur, c'est-à-dire la partie dédiée à la production de vapeur et la partie dédiée au séchage sont situées dans une même enceinte. Par contre, ce type de générateur de vapeur bouilleur a pour inconvénient majeur de présenter une hauteur importante.

Le brevet US3213833 divulgue un réacteur à eau pressurisée avec générateur de vapeur formant le couvercle du réacteur au-dessus de la cuve du réacteur et qui intègre dans son enceinte à la fois un séparateur sous la forme de déflecteurs aptes à mettre en rotation hélicoïdale la vapeur et immédiatement au-dessus un ensemble de sécheurs.

Le brevet JP H01116497 divulgue une installation nucléaire à réacteur à eau bouillante dans lequel une enceinte, déportée de l'enceinte de réacteur, loge à la fois un séparateur et un sécheur.

Il existe donc un besoin d'améliorer la compacité d'un générateur de vapeur de type bouilleur d'un réacteur à eau pressurisée REP, tout en conservant un circuit de recirculation de l'eau secondaire, sans convection forcée, c'est-à-dire sans l'utilisation d'une ou plusieurs pompes de recirculation.

Plus généralement, il existe un besoin de proposer un dispositif de production et de séchage de vapeur saturée qui soit compact, que la vapeur soit produite dans un générateur de vapeur d'un réacteur à eau pressurisée REP ou directement dans la cuve d'un réacteur à eau bouillante REB ou à partir de chaleur dégagée par une chaudière de combustion, dégageant de la chaleur par la combustion d'un ou plusieurs combustibles, tel que du charbon, fioul, gaz, bois, déchets...

Le but de l'invention est donc de répondre au moins partiellement à ce(s) besoin(s).

### Exposé de l'invention

Pour ce faire, l'invention a pour objet une installation de production d'énergie électrique comportant :
- un dispositif de production de vapeur adapté pour produire de la vapeur d'eau saturée à partir d'une source de chaleur et agencé dans une enceinte ;
- un ensemble d'un ou plusieurs séparateurs relié(s) en aval au dispositif de production de vapeur et adapté(s) pour enlever la majeure partie de l'eau de la vapeur produite par le dispositif ; l'ensemble de séparateur(s) étant agencé dans l'enceinte;
- un ensemble d'un ou plusieurs sécheurs, relié en amont à l'ensemble de séparateurs, et adapté(s) pour collecter les gouttelettes d'eau en suspension dans la vapeur d'eau provenant de l'ensemble de séparateurs, générant ainsi de la vapeur sèche;
- une turbine à vapeur comportant au moins un corps de détente de la vapeur sèche; la turbine à vapeur étant adaptée pour produire de l'électricité à partir de la vapeur d'eau la plus sèche possible;
- un ensemble d'échangeur(s) de chaleur, adapté pour fonctionner en tant que surchauffeur(s) de vapeur d'eau ou en tant que réchauffeur d'eau dite eau alimentaire.

Selon l'invention, l'ensemble de sécheur(s) est agencé à l'extérieur de l'enceinte du dispositif de production de vapeur avec son entrée reliée en amont à l'ensemble de séparateurs, une première sortie reliée en aval à l'entrée dudit corps de turbine et une deuxième sortie reliée en aval, en tant que source de chaleur, à l'ensemble d'échangeur(s).

Selon un mode de réalisation avantageux, la turbine à vapeur est une turbine double-corps comportant un corps dit corps haute pression (HP), et un corps dit basse pression (BP), l'ensemble d'échangeur(s), en tant qu'ensemble de surchauffeur(s), est relié à la sortie du corps haute pression et l'entrée du corps basse pression de la turbine et adapté pour réchauffer de la vapeur d'eau sortant du corps haute pression avant son entrée dans le corps basse pression, et la première sortie de l'ensemble de sécheur(s) est reliée en aval à l'entrée du corps haute pression de la turbine haute pression.

Selon un autre mode de réalisation avantageux, la turbine à vapeur est une turbine mono-corps comportant un unique corps de détente, l'ensemble d'échangeur(s) en tant qu'ensemble de réchauffeur(s) est relié à l'entrée d'alimentation en eau, dite eau alimentaire produite en aval de la turbine mono-corps, du dispositif de production de vapeur et adapté pour réchauffer ladite eau alimentaire, et la première sortie de l'ensemble de sécheur(s) est reliée en aval à l'entrée de l'unique corps de la turbine.

L'invention s'applique principalement aux réacteurs à eau pressurisée REP comprenant un générateur de vapeur de type bouilleur, et ceci que le réacteur soit de type à boucles ou intégré et quelle que soit sa puissance.

Ainsi, selon un mode de réalisation avantageux, la source de chaleur est un coeur de réacteur nucléaire à eau pressurisée REP et le dispositif de production de vapeur est un générateur de vapeur comportant un faisceau de tubes pour échanger la chaleur entre l'eau primaire et l'eau secondaire à l'état de vapeur d'eau saturée à la sortie du faisceau.

Selon ce mode, l'enceinte du générateur de vapeur peut constituer avantageusement le couvercle de la cuve du réacteur.

Selon un autre mode de réalisation avantageux, la source de chaleur est un coeur de réacteur nucléaire à eau bouillante (REB), le dispositif de production de vapeur étant intégré dans la cuve du réacteur nucléaire REB.

Grâce à l'invention, non seulement on réduit la hauteur totale d'un générateur de vapeur d'un réacteur REP ou d'une cuve d'un réacteur REB, comparativement respectivement à un générateur de vapeur de type bouilleur ou une cuve de réacteur REB selon l'état de l'art, mais en outre on conserve l'avantage d'avoir une circulation naturelle du fluide de travail dans l'enceinte du générateur de vapeur, contrairement au réacteur REP selon l'état de l'art tel que décrit dans la publication [1].

Selon une variante de réalisation avantageuse, l'ensemble de sécheur(s) est logé dans une seule enceinte avec une partie inférieure en entonnoir reliée en amont à la deuxième sortie de l'ensemble de sécheur(s) et en aval à l'ensemble d'échangeur(s).

De préférence, chaque séparateur(s) est constitué par un séparateur à cyclone.

Selon une caractéristiques avantageuse, lorsque l'installation comprend un réacteur nucléaire à eau pressurisée REP d'une puissance égale à 150 MWe, la hauteur totale de la cuve et de l'enceinte formant couvercle est inférieure à 15 m, typiquement égale à 13,5 m.

L'invention concerne également un réacteur nucléaire comprenant :
- une cuve ;
- un coeur de réacteur logé dans la cuve ;
- un dispositif de production de vapeur de l'installation qui vient d'être décrite ;
- une enceinte comportant un ensemble de sécheur(s) de l'installation qui vient d'être décrite.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique en coupe longitudinale d'un générateur de vapeur dit bouilleur pour un réacteur à eau pressurisée (REP) selon l'état de l'art ;
- la figure 2 est une vue schématique en coupe longitudinale d'un générateur de vapeur dit bouilleur pour un réacteur à eau bouillante (REB) selon l'état de l'art ;
- la figure 3 est une vue schématique d'un réacteur nucléaire à eau pressurisée (REP) selon l'état de l'art, dont le circuit secondaire met en oeuvre un cycle de Rankine;
- la figure 4 est une vue schématique d'un réacteur nucléaire à eau pressurisée (REP) selon l'invention, dont le circuit secondaire met en oeuvre un cycle de Rankine ;
- la figure 5 est une vue schématique d'un réacteur nucléaire à eau bouillante (REB) selon l'invention, dont le circuit secondaire met en oeuvre un cycle de Rankine ;
- la figure 6 est une vue schématique d'un réacteur nucléaire à eau pressurisée (REP) selon l'état de l'art, dont le circuit secondaire met en oeuvre un cycle de Rankine avec une turbine mono-corps ;
- la figure 7 est une vue schématique d'un réacteur nucléaire à eau pressurisée (REP) selon l'invention, dont le circuit secondaire met en oeuvre un cycle de Rankine avec une turbine mono-corps.

Dans l'ensemble de la présente demande, les termes « vertical », « inférieur », « supérieur », « bas », « haut », « dessous » et « dessus » sont à comprendre par référence par rapport à un générateur de vapeur, une cuve d'un réacteur, un ensemble de sécheurs selon l'invention tels qu'ils sont en configuration verticale de fonctionnement. Ainsi, dans une configuration de fonctionnement, la partie supérieure de la cuve d'un réacteur est celle située au-dessus du coeur

De même, dans l'ensemble de la présente demande, les termes « entrée », « sortie » « aval » et « amont » sont à comprendre en référence au sens de circulation de la vapeur saturée dans un cycle de Rankine à la fois dans le dispositif de production de vapeur et depuis ce dernier jusqu'à la turbine à vapeur.

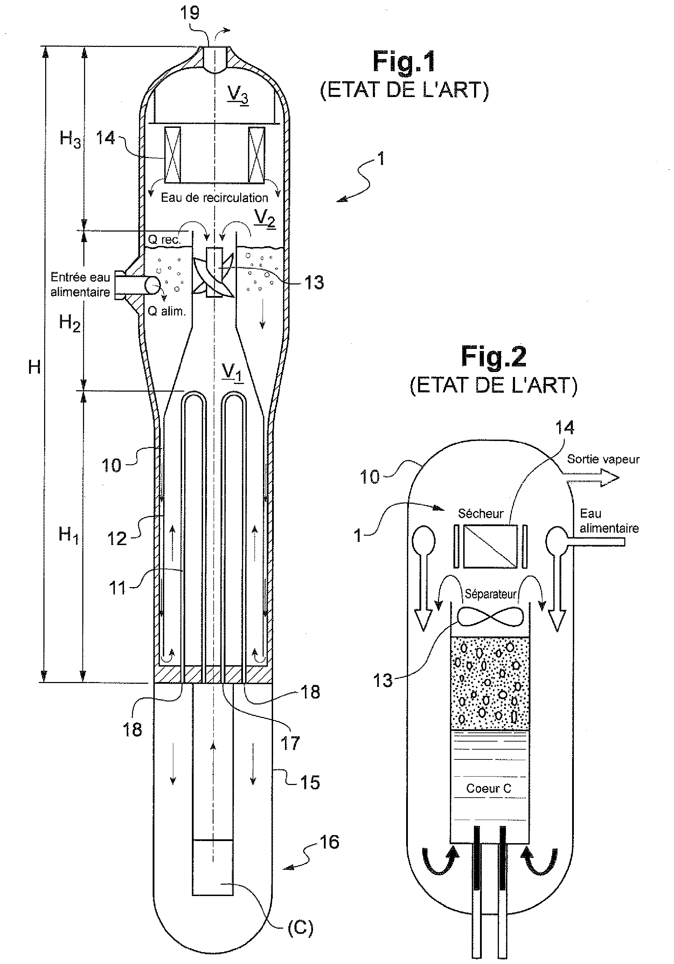

Par souci de clarté, les mêmes références désignant les mêmes éléments de réacteur et de l'installation nucléaire selon l'état de l'art et selon l'invention sont utilisées pour les figures 2 à 7.

Pour les descriptions de figures représentant des réacteurs nucléaires REP, le fluide de travail sera désigné par fluide ou eau secondaire. Le fluide intermédiaire sera désigné par fluide ou eau primaire.

Pour les descriptions des figures représentant des réacteurs nucléaires REB, seul le fluide de travail sera décrit. Il n'y a pas de fluide intermédiaire.

On précise que dans l'ensemble des figures, la partie cuve de réacteur REP ou REB proprement dite a été simplifiée et que l'on distingue uniquement le coeur de réacteur et les chemins hydrauliques principaux de la vapeur d'eau primaire dans le cas d'un réacteur REB. Il va de soi que la cuve de réacteur comprend par ailleurs les pompes, pressuriseur dans le cas d'un réacteur REP et autres composants non représentés et qui ne sont pas utiles à la description de l'invention.

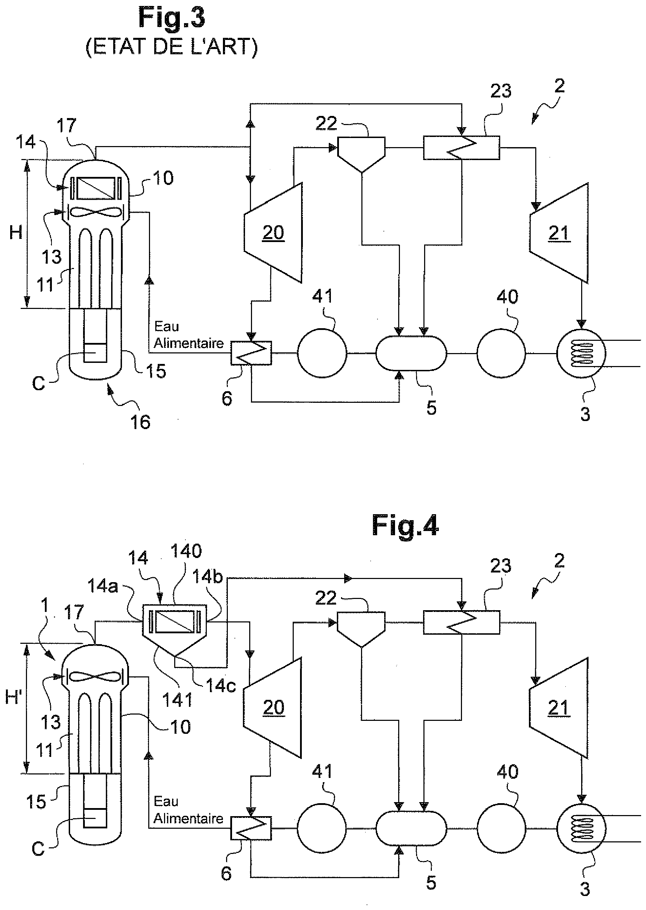

On précise ici également que par souci de clarté, sur les figures 3 à 5, tous les soutirages au niveau des corps haute pression HP 20 et basse pression BP 21 de la turbine à vapeur 2, c'est-à-dire les parties du circuit d'eau secondaire (fluide de travail) adaptées pour extraire de l'eau secondaire chaude vers la conduite d'eau alimentaire, pour le réchauffage de cette dernière, n'ont pas été représentés.

La figure 1 représente en détail un générateur de vapeur dit bouilleur 1 qui produit de la vapeur juste à saturation pour les réacteurs REP. Un tel générateur de vapeur bouilleur 1 est logé dans une enceinte 10.

Il comporte tout d'abord un faisceau de tubes 11 adaptés pour échanger la chaleur entre un fluide primaire et le fluide secondaire à vaporiser. Lorsqu'un tel générateur 1 est utilisé en tant que générateur de vapeur à partir de la chaleur produite par un réacteur nucléaire de type REP, les deux fluides, i.e. primaire et secondaire sont constitués par de l'eau. Le faisceau de tubes 11 est lui-même logé dans une virole 12 à l'intérieur de l'enceinte 10. En général, le coeur C du réacteur REP (intégré) est situé juste en dessous de l'enceinte 10, de sorte que l'enceinte 10 constitue le couvercle de la cuve 15 du réacteur nucléaire 16. On précise que pour des réacteurs REP à boucles sont agencés, en dessous le générateur de vapeur, les tuyaux d'arrivée et de sortie d'eau primaire.

Au-dessus du faisceau de tubes 11, également à l'intérieur de la virole 12 est agencée au moins une hélice 13 montée fixe formant une partie d'un séparateur à cyclone, l'autre partie étant la partie enveloppe tubulaire constituée de la virole 12.

Au-dessus de l'ensemble à séparateur (s) à cyclone 13 est agencé un ensemble de sécheur(s) 14 constitué(s) généralement de parois en chicane.

Le fonctionnement d'un tel générateur à vapeur 1 va maintenant être expliqué en relation avec les flèches indiquant le sens de circulation de l'eau du circuit primaire et du circuit secondaire.

Le circuit primaire est réalisé par l'eau, dite primaire, chauffée par le coeur de réacteur nucléaire qui arrive par l'ouverture d'entrée 17 circule dans le faisceau de tubes 11 puis sort par l'ouverture de sortie 18 afin de revenir vers le coeur du réacteur nucléaire.

Dans la première partie du générateur de vapeur 1, l'eau du circuit secondaire, dit eau secondaire, est vaporisée par contact avec le faisceau de tubes 11 à l'intérieur de la virole 12. A la sortie de la zone de contact avec le faisceau de tubes 11, l'eau secondaire n'est que partiellement vaporisée (état V1) et n'est donc pas utilisable telle quelle pour alimenter une turbine à vapeur.

La seconde partie de la génération de vapeur permet d'assécher complètement la vapeur avant de l'utiliser pour actionner la turbine. Cette seconde partie comprend l'ensemble à séparateur(s) 13 et l'ensemble de sécheur(s) 14. Lors de son passage dans une hélice fixe 13 d'un séparateur à cyclone, l'eau secondaire en mouvement se met en rotation. La phase liquide est projetée à l'extérieur, tandis que la phase vapeur reste au centre et passe à un état V2.

La phase liquide retourne par gravité avec l'eau alimentaire, c'est-à-dire l'eau secondaire qui entre dans le générateur de vapeur 1, dans l'espace annulaire délimité entre la paroi externe 10 et la virole interne 12.

A la sortie des séparateurs à cyclone 13, la vapeur à son état V2 est pratiquement toute séparée de la phase liquide mais peut contenir encore des gouttelettes d'eau liquide qui ne permet pas à la vapeur d'eau secondaire d'être amenée telle quelle dans une turbine à vapeur, en raison du risque d'érosion qu'elle pourrait provoquer sur les aubes de la turbine.

Ainsi, afin d'obtenir de la vapeur sèche en sortie 19, la vapeur d'eau secondaire sortant des séparateurs à cyclone 13, traverse à faible vitesse l'ensemble de sécheurs 14 sur lesquelles les gouttelettes viennent se déposer puis retournent par gravité avec l'eau alimentaire, comme illustré par les flèches incurvées par le bas à proximité des sécheurs 14. La vapeur d'eau a lors atteint son état V3 de vapeur sèche.

Ainsi, l'eau secondaire parcourt en convection naturelle plusieurs fois (trois, quatre ou plus) une boucle à l'intérieur de l'enceinte du générateur de vapeur, cette boucle étant constitué de l'espace annulaire entre la paroi externe 10 et la virole interne 12, le faisceau de tubes 11, les séparateurs à cyclone 13 et les sécheurs 14.

La figure 2 représente en détail un autre générateur de vapeur dit bouilleur 1 qui produit de la vapeur juste à saturation pour un réacteur REB. Un tel générateur de vapeur bouilleur 1 est logé dans une enceinte 10. La différence avec la figure 1 réside dans le fait qu'il n'y a pas de faisceau de tubes 11 adaptés pour échanger la chaleur entre un fluide primaire et le fluide secondaire à vaporiser. Le fluide de travail est chauffé en traversant le coeur C de réacteur nucléaire, et est ainsi directement transformé en vapeur. L'ensemble à séparateur(s) 13 et l'ensemble de sécheurs 14 permettent d'obtenir de la vapeur sèche V3 à la sortie du réacteur.

Typiquement, la moitié de la hauteur totale H d'un tel générateur de vapeur bouilleur 1 selon l'état de l'art correspond sensiblement à la hauteur H1 du faisceau de tubes 11, un quart de la hauteur H correspond sensiblement à la hauteur H2 nécessaire à l'agencement des séparateurs à cyclone 13 et le dernier quart de la hauteur H correspond sensiblement à la hauteur H3 nécessaire à l'agencement des sécheurs 14.

Un tel générateur à vapeur bouilleur 1 selon l'état de l'art est satisfaisant du point de vue de son fonctionnement mais a pour inconvénient majeur de présenter un encombrement géométrique important de par sa hauteur totale H qui est importante.

Cette hauteur H importante du générateur de vapeur 1 peut être préjudiciable dans les réacteurs que l'on souhaite le plus compact, notamment ceux qui ont déjà été conçus avec un générateur de vapeur de type bouilleur en tant que couvercle de cuve de réacteur à eau pressurisée (REP), tel que décrit dans le brevet EP1464058B1.

En effet, cette hauteur H importante peut être préjudiciable pour une installation nucléaire stationnaire à terre pour laquelle on recherche un minimum de hauteur ou encore pour une installation nucléaire qui serait susceptible d'être embarquée pour être transportée.

Aussi, afin de réduire la hauteur totale H d'un tel générateur à vapeur 1, l'inventeur de la présente invention a imaginé séparer physiquement en deux parties distinctes les composants essentiels du circuit de fluide de travail tout en conservant la circulation naturelle entre les éléments de chauffage de la vapeur et le fluide de travail.

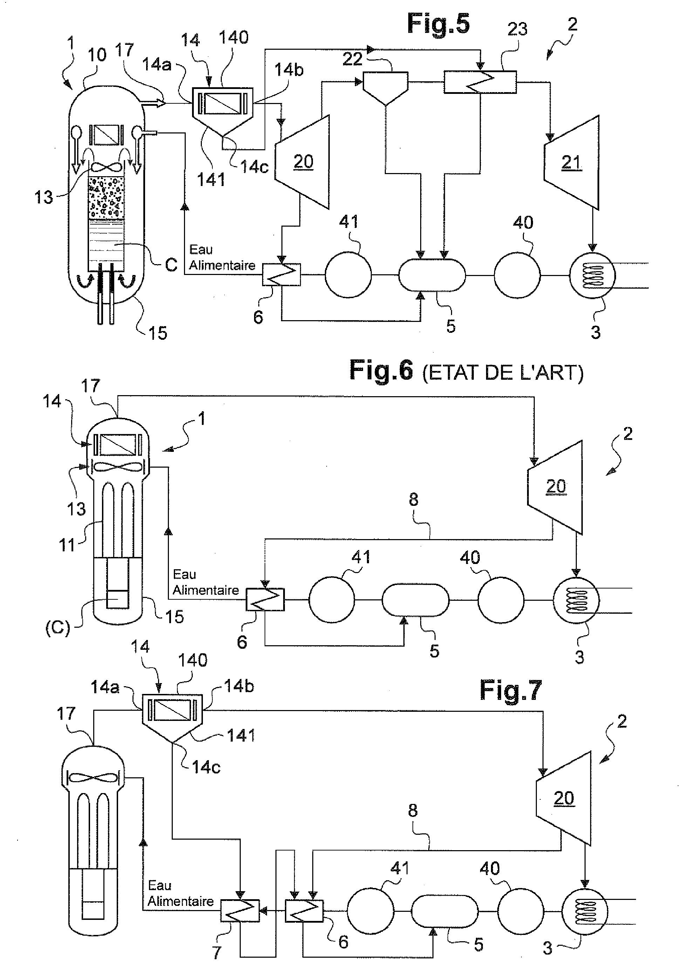

Selon l'invention, tel qu'illustré en figures 4 et 5, il est prévu d'agencer l'ensemble de sécheur(s) 14 à l'extérieur de l'enceinte 10 du générateur de vapeur 1 avec son entrée 14a reliée en amont à l'ensemble de séparateurs 13, une première sortie 14b reliée en aval à l'entrée du corps haute pression 20 d'une turbine à vapeur 2 et une deuxième sortie 14c reliée en aval à l'ensemble de surchauffeur(s) 23.

Autrement dit, l'ensemble de séparateurs à cyclone 13 reste au-dessus du faisceau de tubes 11, à l'intérieur de l'enceinte 10 du générateur de vapeur 1 comme selon l'état de l'art, mais conformément à l'invention, l'ensemble de sécheurs 14 est déporté en dehors de l'enceinte 10 du générateur 1. La phase liquide de l'eau secondaire récoltée par l'ensemble de sécheurs 14 ne pouvant plus retourner par gravité vers l'eau alimentaire comme dans l'état de l'art, elle est envoyée conformément à l'invention directement vers l'ensemble de surchauffeur(s) 23 de la turbine.

Autrement dit encore, grâce à l'invention, non seulement on réduit la hauteur totale d'un générateur de vapeur selon l'invention, comparativement à un générateur de vapeur de type bouilleur selon l'état de l'art mais en outre on conserve l'avantage d'avoir une circulation naturelle du fluide de travail à l'intérieur de l'enceinte 10 du générateur 1, contrairement au réacteur REP selon l'état de l'art tel que décrit dans la publication [1].

La figure 3 représente un schéma simplifié du cycle de Rankine habituellement rencontré dans un circuit secondaire d'un réacteur REP selon l'état de l'art dans lequel un générateur de vapeur 1 tel que celui décrit en figure 1 est comprise à l'intérieur d'une enceinte 10, le circuit d'eau secondaire comprenant une turbine à vapeur 2 à double-corps 20, 21 de détente
D'amont en aval du générateur de vapeur 1, le circuit secondaire comporte la turbine à vapeur 2 comportant elle-même un corps haute pression HP 20 et un corps basse pression 21. Un ensemble de sécheur(s) 22 en série avec un ensemble de surchauffeur(s) 23 est relié d'une part à la sortie du corps HP 20 et d'autre part à l'entrée du corps BP 21. L'ensemble de surchauffeurs 23 est situé de préférence en sortie de l'ensemble de sécheurs 22.

Les ensembles de sécheur(s) 22 et de surchauffeur(s) 23 ont pour fonction d'améliorer le rendement de la turbine à vapeur 2 et d'éviter l'érosion des aubes du corps BP 21. En effet, à la sortie du corps HP 20, la vapeur d'eau secondaire est très humide avec un titre thermodynamique de l'ordre de 10%. Ainsi, l'ensemble de sécheur(s) 22 permet de ramener le titre thermodynamique à une valeur égale à l'unité pour éviter l'érosion des aubes du corps BP 21 de la turbine 2. L'ensemble de surchauffeur(s) 23 permet de réchauffer la vapeur d'eau secondaire sortant du corps HP 20 avant son entrée dans le corps BP 21, ce qui améliore le rendement de la turbine. Typiquement, dans un circuit secondaire d'un réacteur REP, la pression de la vapeur à la sortie du corps HP 20 est de l'ordre d'une dizaine de bars.

La surchauffe de la vapeur est obtenue par un soutirage de celle-ci juste en entrée du corps HP 20 par la partie de circuit secondaire qui l'amène directement à l'ensemble surchauffeur 23. Typiquement, environ 10% de la vapeur avant entrée du corps HP est détourné pour le surchauffage de la vapeur.

Cette vapeur qui sort du générateur de vapeur et contourne le corps HP 20 transfère alors sa chaleur par condensation à la partie principale du circuit secondaire qui relie le(s) sécheur(s) 22 au corps BP 21.

Dans la partie retour du circuit secondaire, i.e. celle qui ramène l'eau alimentaire en entrée du générateur de vapeur 1, à la sortie du corps BP 21 de la turbine 2, la vapeur est alors complètement condensée au moyen d'un condenseur 3, de type fonctionnant à très basse pression, puis est envoyée au moyen d'une première pompe, dite pompe de relevage 40, dans un collecteur d'eau 5 appelé usuellement bâche alimentaire. Une deuxième pompe 41, dite pompe d'eau alimentaire permet l'alimentation du générateur 1 de vapeur en eau alimentaire à haute pression. Une partie de la vapeur sortant du corps HP 20 de la turbine 2 permet le préchauffage de l'eau alimentaire au moyen d'un ensemble de réchauffeur(s) 6 en aval de la pompe d'eau alimentaire 41. La vapeur d'eau qui sert au préchauffage de l'eau alimentaire par le(s) réchauffeur 6 peut retourner en amont vers la bâche alimentaire 5. La vapeur d'eau qui sert au réchauffage de l'eau alimentaire par soutirage de la vapeur entre deux étages de détente dans le corps HP 20 peut également retourner vers la bâche alimentaire 5. Il en est de même pour les condensats issus du sécheur 22.

La figure 4 représente le même schéma simplifié du cycle de Rankine d'un réacteur REP selon la figure 1 mais avec un agencement de l'ensemble de sécheurs 14 selon l'invention.

Ici, l'ensemble de sécheurs 14 est déporté à l'extérieur de l'enceinte 10 du générateur 1 avec son entrée 14a reliée en amont à l'ensemble de séparateurs 13, une première sortie 14b reliée en aval à l'entrée du corps haute pression 20 de la turbine 2 et une deuxième sortie 14c reliée en aval à l'ensemble de surchauffeur(s) 23.

L'ensemble de sécheurs 14 est logé dans une enceinte 140 en forme d'entonnoir 141 dont l'ouverture 14c est reliée en amont à la deuxième sortie de l'ensemble de sécheur(s) 14 et en aval à l'ensemble de surchauffeur(s) 23.

Ainsi, conformément à l'invention, la circulation du fluide de travail dans le générateur de vapeur 1 est assurée naturellement, par convection naturelle à l'intérieur de l'enceinte 10, c'est-à-dire sans convection forcée dans une boucle hydraulique constituée de l'espace annulaire, du faisceau de tubes 11 et des séparateurs à cyclone 13. En effet, les condensats collectés par l'ensemble sécheur 14 avec le débit vapeur nécessaire à la surchauffe sont envoyés par l'entonnoir 141 vers l'ensemble de surchauffeur(s) 23 entre les corps HP 20 et BP 21 de la turbine 2. Comme illustré, toutes les autres parties du circuit secondaire de la figure 4 selon l'invention restent inchangées par rapport à celles du circuit secondaire de la figure 3 selon l'état de l'art.

La vapeur sortant de l'enceinte 10 du générateur de vapeur est de mauvaise qualité pour être introduite dans une turbine 2 car elle contient des gouttelettes d'eau, mais la quantité d'eau liquide est faible et l'écoulement de ce mélange ne risque pas de provoquer d'écoulement à bouchon préjudiciable à sa stabilité. Dans ces conditions, l'enceinte 140 contenant les sécheurs 14 peut être placée à côté de l'enceinte 10 du générateur de vapeur 1 sans contrainte altimétrique. Un positionnement judicieux est de placer cette enceinte 140 un peu en-dessous de la partie supérieure de l'enceinte 10 du générateur de vapeur 1 dans le but de réduire la hauteur totale du réacteur, c'est-à-dire de la cuve et de l'ensemble du dispositif de production de vapeur comprenant l'enceinte 10 du générateur de vapeur et de l'enceinte de séchage 140.

La figure 5 représente le même schéma simplifié du cycle de Rankine d'un réacteur REB selon la figure 2 mais avec un agencement de l'ensemble de sécheurs 14 selon l'invention comme représenté et décrit pour la figure 4.

Grâce à l'invention, pour un réacteur REP de 150 MWe de puissance, on peut en combinaison avec une augmentation de la longueur d'échange du faisceau de tubes 11 et en déportant la partie des sécheurs selon la présente invention, obtenir une hauteur totale H' de l'enceinte 10 du générateur de vapeur de 5 m environ. Sans le déport de la partie des sécheurs 14 selon l'invention, la hauteur totale H de l'enceinte 10 du générateur de vapeur selon l'état de l'art serait d'environ un mètre de plus.

D'autres applications que celle qui vient d'être décrite en référence avec un réacteur REP peuvent être envisagées dans le cadre de l'invention.

Ainsi, comme décrit en référence aux figures 2 et 5, on peut tout à fait envisager de déporter en dehors de la cuve de réacteur, l'ensemble de sécheurs 14 d'un type de réacteur à eau bouillante déjà connu, tel qu'un réacteur ESBWR à eau bouillante (de l'anglais « *Economic Simplified Boiling Water Reactor »)* dans lequel jusqu'à présent un ensemble de séparateurs et un ensemble de sécheurs sont intégrés nécessairement dans la partie supérieure de la cuve du réacteur (figure 2).

On peut envisager d'appliquer l'invention à une installation de production d'énergie électrique avec un réacteur nucléaire et une turbine 2 mono-corps, c'est-à-dire une turbine qui comprend un seul corps 20 de détente de vapeur. Une telle application est illustrée en référence à la figure 6 selon l'état de l'art et à la figure 7 selon l'invention.

La figure 6 représente un schéma simplifié du cycle de Rankine habituellement rencontré dans un circuit secondaire d'un réacteur REP selon l'état de l'art dans lequel un générateur de vapeur 1 tel que celui décrit en figure 1 est comprise à l'intérieur d'une enceinte 10 mais contrairement aux figures 3 et 4, le circuit secondaire comprend une turbine à vapeur 2 mono-corps avec un seul corps de détente 20.

A la différence d'un circuit secondaire avec une turbine double-corps illustrée à la figure 3 selon l'état de l'art et la figure 5 selon l'invention, la turbine à vapeur 2 mono-corps ne comporte pas d'ensemble de sécheur(s) 22 et d'ensemble de surchauffeur(s) 23.

Ainsi, dans la partie retour du circuit secondaire à turbine mono-corps 2, i.e. celle qui ramène l'eau alimentaire en entrée du générateur de vapeur 1 :
- une partie de la vapeur à la sortie du seul corps 20 de la turbine 2, est complètement condensée au moyen du condenseur 3 ;
- une autre partie de la vapeur sortant du seul corps 20 de la turbine 2 permet le préchauffage de l'eau alimentaire au moyen de l'ensemble de réchauffeur(s) 6 en aval de la pompe d'eau alimentaire 41. La vapeur d'eau qui sert au préchauffage de l'eau alimentaire par le(s) réchauffeur(s) 6 peut retourner en amont vers la bâche alimentaire 5.

Comme illustré en figure 7 selon l'invention, dans un circuit secondaire à turbine mono-corps 2, on prévoit à_la sortie 14c de l'ensemble de sécheur(s) 14, d'envoyer les condensats vers un ensemble de réchauffeur(s) 7 pour réchauffer l'eau alimentaire déjà préchauffée au préalable par l'autre ensemble de réchauffeur(s) 6.

A la sortie du (des) réchauffeur(s)7, les condensats peuvent être envoyés dans le(s) réchauffeur(s) 6 pour préchauffer l'eau alimentaire. De même, la vapeur soutirée 8 du corps 20 peut être envoyée dans le réchauffeur 6 dans le même but.

On peut également envisager d'appliquer l'invention à une installation de production d'énergie électrique dans lequel la production de vapeur ne serait pas réalisée avec un réacteur nucléaire mais avec une chaudière dégageant de la chaleur par la combustion d'un ou plusieurs combustibles, tel que du charbon, fioul, gaz, bois, déchets.

L'invention n'est pas limitée aux exemples qui viennent d'être décrits ; on peut notamment combiner entre elles des caractéristiques des exemples illustrés au sein de variantes non illustrées.

### REFERENCE CITEE

[1] : « Westinghouse Small Modular Reactor Nuclear Steam Supply System Design » - Proceedings of ICAPP '12 Chicago, USA, June 24-28, 2012 - Paper 12248

## Revendications

1. Installation de production d'énergie électrique comportant :
- un dispositif (1) de production de vapeur adapté pour produire de la vapeur d'eau saturée (V1) à partir d'une source de chaleur et agencé dans une enceinte (10) ;
- un ensemble d'un ou plusieurs séparateurs (13) relié(s) en aval au dispositif (1) de production de vapeur et adapté(s) pour enlever la majeure partie de l'eau de la vapeur (V1) produite par le dispositif (1) ; l'ensemble de séparateur(s) étant agencé dans l'enceinte (10) ;
- un ensemble d'un ou plusieurs sécheurs (14), relié en amont à l'ensemble de séparateurs (13), et adapté(s) pour collecter les gouttelettes d'eau en suspension dans la vapeur d'eau (V2) provenant de l'ensemble de séparateurs, générant ainsi de la vapeur sèche (V3) ;
- une turbine à vapeur (2) comportant au moins un corps (20) de détente de la vapeur d'eau sèche (V3), la turbine à vapeur étant adaptée pour produire de l'électricité à partir de la vapeur d'eau sèche (V3) ;
- un ensemble d'échangeurs (23, 7), adapté pour fonctionner en tant que surchauffeur(s) de vapeur d'eau ou en tant que réchauffeur d'eau dite eau alimentaire ;
**caractérisée en ce que** l'ensemble de sécheur(s) (14) est agencé à l'extérieur de l'enceinte (10) du dispositif de production de vapeur (1) avec son entrée (14a) reliée en amont à l'ensemble de séparateurs (13), une première sortie (14b) reliée en aval à l'entrée dudit corps (20) de la turbine et une deuxième sortie (14c) reliée en aval, en tant que source de chaleur, à l'ensemble d'échangeurs (23, 7).

2. Installation de production d'énergie électrique selon la revendication 1, **caractérisée en ce que** la turbine à vapeur est une turbine double-corps comportant un corps (20) dit corps haute pression (HP), et un corps (21) dit basse pression (BP), **en ce que** l'ensemble de échangeur(s), en tant qu'ensemble de surchauffeur(s) (23), est relié à la sortie du corps haute pression (20) et l'entrée du corps basse pression (21) de la turbine (2) et adapté pour réchauffer de la vapeur d'eau sortant du corps haute pression avant son entrée dans le corps basse pression, et **en ce que** la première sortie (14b) de l'ensemble de sécheur(s) (14) est reliée en aval à l'entrée du corps haute pression (20) de la turbine haute pression (20).

3. Installation de production d'énergie électrique selon la revendication 1, **caractérisée en ce que** la turbine à vapeur est une turbine mono-corps comportant un unique corps de détente (20), **en ce que** l'ensemble d'échangeur(s) en tant qu'ensemble de réchauffeur(s) (7) est relié à l'entrée d'alimentation en eau alimentaire, produite en aval de la turbine mono-corps, du dispositif de production de vapeur et adapté pour réchauffer ladite eau alimentaire, et **en ce que** la première sortie (14b) de l'ensemble de sécheur(s) (14) est reliée en aval à l'entrée de l'unique corps (20) de la turbine.

4. Installation de production d'énergie électrique selon l'une des revendications précédentes , **caractérisée en ce que** la source de chaleur est un coeur de réacteur nucléaire à eau pressurisée REP et le dispositif de production de vapeur est un générateur de vapeur (1) comportant un faisceau de tubes (11) pour échanger la chaleur entre l'eau primaire et l'eau secondaire à l'état de vapeur d'eau saturée V2 à la sortie du faisceau.

5. Installation de production d'énergie électrique selon la revendication 4, **caractérisée en ce que** l'enceinte (10) du générateur de vapeur constitue le couvercle de la cuve (15) du réacteur (16).

6. Installation de production d'énergie électrique selon l'une des revendications 1 à 3, **caractérisée en ce que** la source de chaleur est un coeur de réacteur nucléaire à eau bouillante (REB), le dispositif de production de vapeur étant intégré dans la cuve du réacteur nucléaire REB.

7. Installation de production d'énergie électrique selon l'une des revendications précédentes, **caractérisée en ce que** l'ensemble de sécheur(s) (14) est logé dans une seule enceinte (140) avec une partie inférieure en entonnoir reliée en amont à la deuxième sortie (14c) de l'ensemble de sécheur(s) (14) et en aval à l'ensemble d'échangeur(s) (23, 7).

8. Installation de production d'énergie électrique selon l'une des revendications précédentes, **caractérisée en ce que** chaque séparateur (13) est constitué par un séparateur à cyclone.

9. Installation de production d'énergie électrique selon la revendication 5, **caractérisée en ce que** le réacteur nucléaire à eau pressurisée REP est d'une puissance égale à 150 MWe et la hauteur totale de la cuve et de l'enceinte formant couvercle est inférieure à 15 m, typiquement égale à 13,5 m.

## Patentansprüche

1. Anlage zur Erzeugung von Elektroenergie, welche aufweist:
- eine Vorrichtung (1) zur Dampferzeugung, die dafür ausgelegt ist, mithilfe einer Wärmequelle gesättigten Wasserdampf (V1) zu erzeugen, und in einer Hülle (10) angeordnet ist;
- eine Anordnung von einem oder mehreren Abscheidern (13), der (die) der Vorrichtung (1) zur Dampferzeugung nachgeschaltet ist (sind) und dafür ausgelegt ist (sind), den überwiegenden Teil des Wassers aus dem von der Vorrichtung (1) erzeugten Dampf (V1) zu entfernen; wobei die Anordnung von Abscheidern in der Hülle (10) angeordnet ist;
- eine der Anordnung von Abscheidern (13) vorgeschaltete Anordnung von einem oder mehreren Trocknern (14), der (die) dafür ausgelegt ist (sind), die in dem von der Anordnung von Abscheidern stammenden Wasserdampf (V2) schwebenden Wassertröpfchen zu sammeln, wodurch Trockendampf (V3) erzeugt wird,
- eine Dampfturbine (2), die wenigstens ein Expansionsgehäuse (20) für den trockenen Wasserdampf (V3) aufweist, wobei die Dampfturbine dafür ausgelegt ist, aus dem trockenen Wasserdampf (V3) Elektrizität zu erzeugen;
- eine Anordnung von Austauschern (23, 7), die dafür ausgelegt ist, als Wasserdampfüberhitzer oder als Erwärmer von Wasser, Speisewasser genannt, betrieben zu werden;
**dadurch gekennzeichnet, dass** die Trockneranordnung (14) außerhalb der Hülle (10) der Vorrichtung zur Dampferzeugung (1) angeordnet ist, wobei ihr Eingang (14a) stromaufwärts mit der Anordnung von Abscheidern (13) verbunden ist, ein erster Ausgang (14b) stromabwärts mit dem Eingang des Gehäuses (20) der Turbine verbunden ist und ein zweiter Ausgang (14c) stromabwärts, als Wärmequelle, mit der Anordnung von Austauschern (23, 7) verbunden ist.

2. Anlage zur Erzeugung von Elektroenergie nach Anspruch 1, **dadurch gekennzeichnet, dass** die Dampfturbine eine zweigehäusige Turbine ist, die ein als Hochdruckgehäuse (HD-Gehäuse) bezeichnetes Gehäuse (20) und ein als Niederdruckgehäuse (ND-Gehäuse) bezeichnetes Gehäuse (21) aufweist, dadurch, dass die Austauscheranordnung, als Überhitzeranordnung (23), mit dem Ausgang des Hochdruckgehäuses (20) und dem Eingang des Niederdruckgehäuses (21) der Turbine (2) verbunden ist und dafür ausgelegt ist, Wasserdampf, der aus dem Hochdruckgehäuse austritt, vor seinem Eintritt in das Niederdruckgehäuse zu erwärmen, und dadurch, dass der erste Ausgang (14b) der Trockneranordnung (14) stromabwärts mit dem Eingang des Hochdruckgehäuses (20) der Hochdruckturbine (20) verbunden ist.

3. Anlage zur Erzeugung von Elektroenergie nach Anspruch 1, **dadurch gekennzeichnet, dass** die Dampfturbine eine eingehäusige Turbine ist, die ein einziges Expansionsgehäuse (20) aufweist, dadurch, dass die Austauscheranordnung als Erwärmeranordnung (7) mit dem Eingang der Vorrichtung zur Dampferzeugung zur Versorgung mit stromabwärts der eingehäusigen Turbine erzeugtem Speisewasser verbunden ist und dafür ausgelegt ist, das Speisewasser zu erwärmen, und dadurch, dass der erste Ausgang (14b) der Trockneranordnung (14) stromabwärts mit dem Eingang des einzigen Gehäuses (20) der Turbine verbunden ist.

4. Anlage zur Erzeugung von Elektroenergie nach einem der vorhergehenden Ansprüche, **dadurch gekennzeichnet, dass** die Wärmequelle ein Kern eines Druckwasser-Kernreaktors DWR ist und die Vorrichtung zur Dampferzeugung ein Dampfgenerator (1) ist, der ein Rohrbündel (11) zum Austausch der Wärme zwischen dem Primärwasser und dem Sekundärwasser im Zustand von gesättigtem Wasserdampf V2 am Ausgang des Bündels aufweist.

5. Anlage zur Erzeugung von Elektroenergie nach Anspruch 4, **dadurch gekennzeichnet, dass** die Hülle (10) des Dampfgenerators den Deckel des Behälters (15) des Reaktors (16) darstellt.

6. Anlage zur Erzeugung von Elektroenergie nach einem der Ansprüche 1 bis 3, **dadurch gekennzeichnet, dass** die Wärmequelle ein Kern eines Siedewasser-Kernreaktors (SWR) ist, wobei die Vorrichtung zur Dampferzeugung in den Behälter des Kernreaktors SWR integriert ist.

7. Anlage zur Erzeugung von Elektroenergie nach einem der vorhergehenden Ansprüche, **dadurch gekennzeichnet, dass** die Trockneranordnung (14) in einer einzigen Hülle (140) mit einem trichterförmigen unteren Teil aufgenommen ist, der stromaufwärts mit dem zweiten Ausgang (14c) der Trockneranordnung (14) und stromabwärts mit der Austauscheranordnung (23, 7) verbunden ist.

8. Anlage zur Erzeugung von Elektroenergie nach einem der vorhergehenden Ansprüche, **dadurch gekennzeichnet, dass** jeder Abscheider (13) aus einem Fliehkraftabscheider besteht.

9. Anlage zur Erzeugung von Elektroenergie nach Anspruch 5, **dadurch gekennzeichnet, dass** der Druckwasser-Kernreaktor DWR eine Leistung aufweist, die 150 MWe beträgt, und die Gesamthöhe des Behälters und der den Deckel bildenden Hülle niedriger als 15 m und typischerweise gleich 13,5 m ist.

## Claims

1. An electrical energy generation facility comprising:
- a steam production device (1) suitable for producing saturated steam (V1) from a heat source and arranged in an enclosure (10);
- a set of one or more separators (13) connected downstream to the steam production device (1) and suitable for extracting the majority of the water from the steam (V1) produced by the device (1); the set of separators being arranged in the enclosure (10);
- a set of one or more dryers (14), connected upstream to the set of separators (13) and suitable for collecting the water droplets in suspension in the steam (V2) coming from the set of separators, thus producing dry steam (V3);
- a steam turbine (2) comprising at least one expansion body (20) for the dry steam (V3), the steam turbine being suitable for generating electricity from the dry steam (V3);
- a set of exchangers (23, 7), suitable for functioning as steam superheaters or for reheating so-called feed water;
**characterized in that** the set of dryers (14) is arranged outside the enclosure (10) of the steam production device (1) with its inlet (14a) connected upstream to the set of separators (13), a first outlet (14b) connected downstream to the inlet of said turbine body (20), and a second outlet (14c) connected downstream as a heat source to the set of exchangers (23, 7).

2. The electrical energy generation facility as claimed in claim 1, **characterized in that** the steam turbine is a double-body turbine comprising a body (20) called a high-pressure body (HP) and a body (21) called a low-pressure body (BP), **in that** the set of exchangers as a set of superheaters (23) is connected to the outlet of the high-pressure body (20) and to the inlet of the low-pressure body (21) of the turbine (2) and is suitable for reheating the steam leaving the high-pressure body before it enters the low-pressure body, and **in that** the first outlet (14b) of the set of dryers (14) is connected downstream to the inlet of the high-pressure body (20) of the high-pressure turbine (20).

3. The electrical energy generation facility as claimed in claim 1, **characterized in that** the steam turbine is a single-body turbine comprising a single expansion body (20), **in that** the set of exchangers as a set of reheaters (7) is connected to the supply inlet for the feed water, produced downstream of the single-body turbine, of the steam production device and is suitable for reheating said feed water, and **in that** the first outlet (14b) of the set of dryers (14) is connected downstream to the inlet of the single body (20) of the turbine.

4. The electrical energy generation facility as claimed in any of the preceding claims, **characterized in that** the heat source is a core of a PWR pressurized water nuclear reactor, and **in that** the steam production device is a steam generator (1) comprising a tube bundle (11) for exchanging heat between the primary water and the secondary water in the saturated steam state V2 at the outlet from the bundle.

5. The electrical energy generation facility as claimed in claim 4, **characterized in that** the enclosure (10) of the steam generator constitutes the cover of the vessel (15) of the reactor (16).

6. The electrical energy generation facility as claimed in any of claims 1 to 3, **characterized in that** the heat source is a core of a boiling water nuclear reactor (BWR), the steam production device being integrated in the vessel of the BWR nuclear reactor.

7. The electrical energy generation facility as claimed in any of the preceding claims, **characterized in that** the set of dryers (14) is housed in a single enclosure (140) with a funnel-shaped lower part connected upstream to the second outlet (14c) of the set of dryers (14) and downstream to the set of exchangers (23, 7).

8. The electrical energy generation facility as claimed in any of the preceding claims, **characterized in that** each separator (13) consists of a cyclone separator.

9. The electrical energy generation facility as claimed in claim 5, **characterized in that** the PWR pressurized water nuclear reactor has a power equal to 150 MWe, and the total height of the vessel and the enclosure forming the cover is less than 15 m, typically equal to 13.5 m.
